Europäisches Patentamt

European Patent Office

Office européen des brevets

(19)

(11) **EP 0 737 868 B1**

(12) **FASCICULE DE BREVET EUROPEEN**

(45) Date de publication et mention
de la délivrance du brevet:
**27.06.2001 Bulletin 2001/26**

(51) Int Cl.⁷: **G01S 5/14**, G01S 1/04,
H04B 1/707

(21) Numéro de dépôt: **96105031.7**

(22) Date de dépôt: **29.03.1996**

(54) **Boucle à verrouillage de délai pour utilisation dans un récepteur de signaux GPS**

Verzögerungsregelschleife für GPS Empfänger

Delay locked loop for use in a GPS receiver

(84) Etats contractants désignés:
**CH DE ES FI GB IT LI NL SE**

(30) Priorité: **11.04.1995 FR 9504333**

(43) Date de publication de la demande:
**16.10.1996 Bulletin 1996/42**

(73) Titulaire: **ASULAB S.A.**
**CH-2501 Bienne (CH)**

(72) Inventeurs:
• **Jeanclaude, Eric**
**1293 Bellevue (CH)**

• **Farine, Pierre-André**
**2003 Neuchâtel (CH)**
• **Etienne, Jean-Daniel**
**2206 Les Geneveys-sur-Coffrane (CH)**

(74) Mandataire: **Patry, Didier Marcel Pierre et al**
**I C B,**
**Ingénieurs Conseils en Brevets S.A.**
**Rue des Sors 7**
**2074 Marin (CH)**

(56) Documents cités:
**EP-A- 0 445 522        EP-A- 0 552 975**
**US-A- 5 365 550**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne des boucles à verrouillage de délai destinées à être utilisées dans des récepteurs de signaux radio et en particulier dans des récepteurs de signaux émis par des satellites GPS comprenant une boucle à verrouillage de délai.

Le système GPS, de son vrai nom NAVSTAR-GPS (acronyme qui provient de l'expression anglaise "NAVigation Satellite Time And Ranging Global Positioning System") émane du département de la défense des Etats-Unis. Ce système utilise une constellation de satellites de navigation pour transmettre des signaux GPS à partir desquels un récepteur terrestre peut déterminer avec précision sa position, sa vitesse et l'heure locale. La constellation se compose de vingt-quatre satellites répartis à une altitude de 20183 km sur six orbites planes inclinées à 55° par rapport à l'équateur. La répartition des satellites est choisie pour assurer une couverture continue de vingt-quatre heures par jour partout dans le monde. Chaque satellite porte au moins un étalon de fréquence atomique afin de pouvoir fournir de l'information horaire à haute précision. De plus, chaque satellite reçoit, par des stations de contrôle terrestre, un signal permettant une correction de son information horaire et de l'information orbitale.

Chaque satellite émet simultanément, en modulation de phase à deux états (en anglais "BiPhase Shift Keying", ou "BPSK"), sur deux porteuses distinctes, à savoir un signal L1 ayant une fréquence de 1575,42 MHz et un signal L2 ayant une fréquence de 1227,6 MHz. Les signaux L1 et L2 sont composés de l'information à proprement parlée, émise au rythme de 50 binaires par seconde, et d'un code d'identification du satellite, qui lui a une fréquence beaucoup plus élevée. Deux types de codes sont utilisés: un code C/A (qui provient de l'expression anglaise "Clear Access") et un code P (qui provient du mot anglais "Protected").

Le code C/A est constitué de 1023 binaires générés à la fréquence de 1,023 MHz, ce qui implique une période de répétition de 1 ms./s. L'utilisation d'un tel code se justifie pour les raisons suivantes: (i) il est pseudo-aléatoire, car il a, sur une courte durée, toutes les caractéristiques d'un bruit blanc; (ii) il s'annule si on le multiplie avec lui-même; et (iii) il permet un accès à de multiples utilisateurs sur la même porteuse. Le code C/A ne se trouve que sur la porteuse L1 et il est le code utilisé pour des applications civiles. L'information émise par le satellite est d'abord modulée BPSK avec le code C/A, ce qui produit un étalement du spectre d'une largeur de bande de base initiale de 50 Hz à 1,023 MHz. La modulation sur la porteuse L1 est ensuite effectuée et le signal ainsi obtenu est transmis au récepteur.

Le signal reçu par le récepteur se caractérise principalement par son énergie en dessous de celle du bruit. Le rapport signal sur bruit est de l'ordre de -20 dB. L'opération inverse à l'étalement du spectre effectué lors de l'émission, c'est-à-dire sa compression, permet de ramener le message à un niveau d'énergie acceptable. Pour ceci il est nécessaire de multiplier le signal reçu par le code pseudo-aléatoire du satellite correspondant, ce qui supprime la modulation introduite par celui-ci. La qualité du résultat dépend du degré de similitude entre le code généré par le récepteur et celui émis par le satellite. Cette qualité souffre malheureusement d'imprécisions liées au concept même du système. Il s'agit principalement des écarts de fréquence dus à l'effet Doppler et aux imprécisions de l'oscillateur faisant partie du récepteur et du déphasage relatif.

Un but de l'invention est de réaliser un récepteur de signaux GPS qui synchronise les deux codes C/A respectifs du satellite et du récepteur.

Un autre but de l'invention est de réaliser un récepteur de signaux GPS dans lequel la compression du spectre du signal GPS est rendue moins complexe qu'il ne l'était dans l'art antérieur.

Un autre but de l'invention concerne un récepteur de signaux GPS qui est simple, efficace, peu coûteux et facile à réaliser.

L'invention à donc pour objet une boucle à verrouillage de délai destinée à être utilisée dans un récepteur d'un signal émis par un satellite GPS, ledit signal comportant de l'information modulée par un code pseudo-aléatoire, ledit récepteur étant agencé de façon à rechercher, lors d'une phase d'acquisition, ledit satellite GPS pour l'identification dudit code pseudo-aléatoire, comprenant :

- un générateur de codes pseudo-aléatoires pour générer une copie du code pseudo-aléatoire dudit satellite;
- un oscillateur local;
- un modulateur pour moduler ladite copie du code pseudo-aléatoire dudit satellite, provenant dudit générateur de codes pseudo-aléatoires, avec le signal de sortie dudit oscillateur local;
- des canaux à signaux comportant chacun un corrélateur relié à la sortie dudit modulateur, un filtre passe-bande relié à la sortie dudit corrélateur et un circuit de détection de signal relié à la sortie dudit filtre passe-bande; et,
- une unité de traitement de données capable de régler la fréquence centrale du signal de sortie dudit oscillateur local en fonction des signaux de sortie desdits circuits de détection de signaux; ladite boucle à verrouillage à délai étant caractérisée en ce que ladite unité de traitement de données est agencée de façon à régler les fréquences centrales et les largeurs de bande desdits filtres passe-bande en plusieurs étapes pendant ladite phase d'acquisition pour que lesdits filtres passe-bande répartissent, à chaque étape, une des bandes passantes de l'étape précédente en des bandes passantes ne se recouvrant pas.

Grâce à ces caractéristiques, un récepteur de signaux GPS peut être réalisé de façon à ce que les filtres passe-bande des trois canaux de la boucle à verrouillage de délai, canaux qui sont nécessaires dans la phase de poursuite du signal GPS, sont également utilisés dans la phase d'acquisition pour identifier le code pseudo-aléatoire du satellite GPS.

D'autres caractéristiques et avantages de l'invention apparaîtront au cours de la description qui va suivre, donnée uniquement à titre d'exemple et faite en se référant aux dessins annexés sur lesquels :

- la figure 1 est un schéma d'un récepteur de signaux GPS comportant une boucle à verrouillage de délai selon l'invention;
- la figure 2 est un schéma d'une boucle à verrouillage de délai numérique qui fait partie du récepteur de signaux GPS de la figure 1;
- la figure 3 est un schéma représentant les bandes passantes des filtres des trois canaux de la boucle à verrouillage de délai de la figure 2 dans des étapes successives de la phase d'acquisition du récepteur de la figure 1; et,
- la figure 4 est un tableau représentant le calcul effectué par l'unité de traitement de données du récepteur de la figure 1 pour arriver à des valeurs de la fréquence du signal de sortie de l'oscillateur local, de la fréquence centrale et de la largeur de bande des filtres passe-bande de ce récepteur.

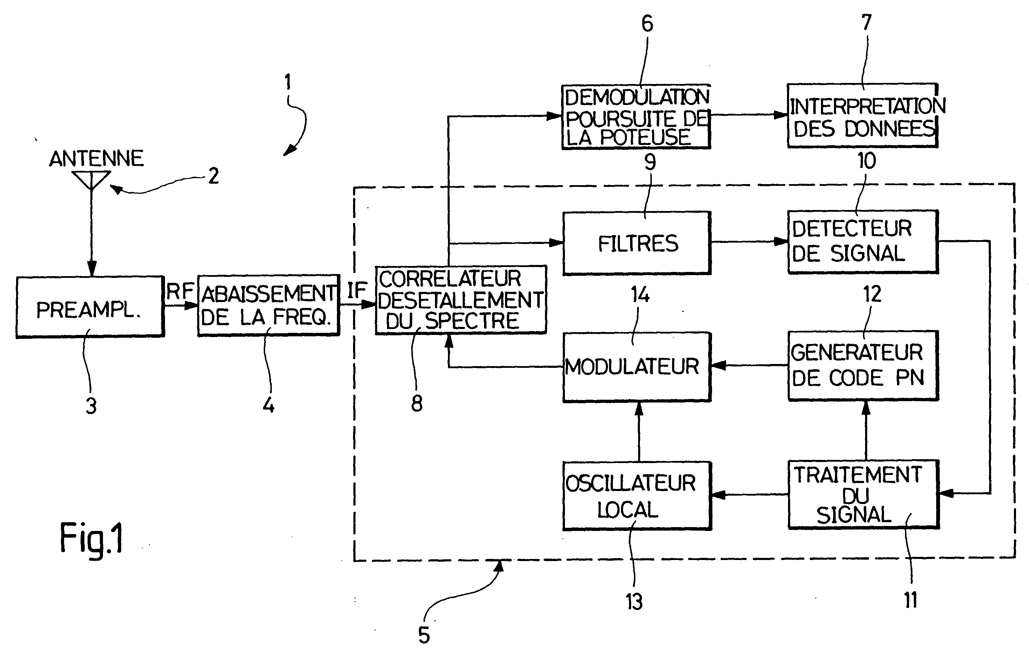

En se référant maintenant à la figure 1, on a représenté sous forme de schéma bloc un récepteur de signaux GPS 1 selon l'invention. Le récepteur 1 comprend une antenne 2 capable de détecter des signaux GPS, un préamplificateur 3 relié à l'antenne 2 et un circuit d'abaissement de fréquence 4 qui, d'une manière classique, ramène la fréquence radio des signaux GPS à une fréquence intermédiaire. Une boucle d'asservissement 5 est reliée à la sortie du circuit d'abaissement de fréquence 4 et sert premièrement à la recherche et deuxièmement au suivi d'un satellite par identification de son code pseudo-aléatoire. Ces deux phases de fonctionnement sont respectivement appelées la phase d'acquisition et la phase de poursuite. Après l'acquisition et pendant la poursuite de ce code pseudo-aléatoire, un circuit de démodulation et de poursuite 6 effectue conjointement une démodulation de la porteuse ramenée à la fréquence intermédiaire susmentionnée et la poursuite de cette porteuse. La démodulation effectuée par le circuit 6 permet la restitution de l'information émise par le satellite GPS, l'interprétation étant fait par un circuit d'interprétation de données 7.

La boucle d'asservissement 5 est constituée par une boucle à verrouillage de délai. Cette dernière effectue une corrélation entre le code pseudo-aléatoire généré par le récepteur et le signal reçu depuis le satellite GPS en question. Il en résulte un signal qui ne s'apparente plus à un bruit blanc lorsque les deux codes pseudo-aléatoires sont identiques. La détection et la poursuite d'un tel signal constituent les fonctions de cette boucle à verrouillage de délai. La boucle à verrouillage de délai 5 comprend un circuit de corrélation 8, un circuit de filtrage 9, un circuit de détection de signal 10, une unité de traitement des données numériques 11, un circuit 12 de génération de codes pseudo-aléatoires, un circuit 13 d'oscillation local et un modulateur 14.

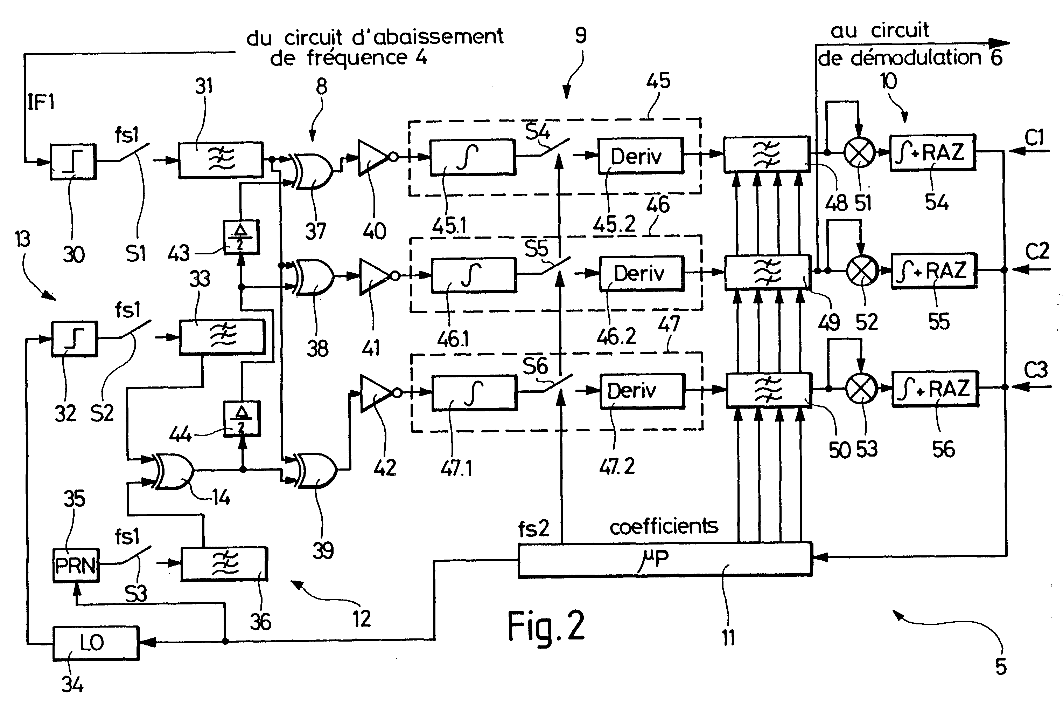

Le fonctionnement de la boucle de code 5 sera expliqué par la suite en faisant référence à la figure 2 qui représente un schéma d'un mode de réalisation de celle-ci. Le signal reçu à l'entrée de la boucle de code 5 se compose de la fréquence porteuse $f_{IF1}$ modulée par le code C/A d'un des satellites GPS et par l'information du message de navigation GPS. Un limiteur de signal 30 et un commutateur à haute vitesse S1 réalise la conversion analogique/numérique du signal reçu sur un binaire. Puisque la largeur de bande LB du signal reçu à l'entrée du limiteur 30 est environ 2,046 MHz, la fréquence intermédiaire $f_{IF1}$ doit être plus grande que la somme de la moitié de cette valeur plus la valeur des écarts de fréquence $\Delta f$ susmentionnés si l'on veut éviter un repli du spectre du signal. Dans la boucle de code 5 montrée à la figure 2, une valeur nominale de $f_{IF1}$ égale à 1,050 MHz est utilisée. Selon la théorie de Shannon, la fréquence d'échantillonnage $f_{s1}$ doit être au moins 2 $\times (\frac{LB}{2} + \Delta f)$ MHz. Comme on verra plus tard, une valeur binaire qui correspond à 1,023 MHz est disponible dans l'unité de traitement de données 11 (cette valeur correspondant à la fréquence de génération du code local dans le récepteur 1. Il est donc convenable d'utiliser cette valeur pour calculer la valeur de la fréquence d'échantillonnage $f_{s1}$. Par exemple, une valeur $f_{s1} = 4f_{prn}$ + $f_{prn}/2^3$ = 4,220 MHz peut être utilisée.

Après l'échantillonnage, le signal reçu est filtré par un filtre passe-bas 31 pour garder uniquement la première répétition du spectre centrée sur 0 Hz. Le filtre passe-bas est un filtre numérique de préférence de l'ordre 2 ou supérieur.

Le circuit 13 comprend un limiteur de signal 32, un commutateur à haute vitesse S2, un filtre passe-bas 33 et un oscillateur local 34. L'oscillateur local 34 produit un signal dont la fréquence $f_{LO}$ est réglée par un signal de commande provenant de l'unité de traitement de données 11. Le limiteur de signal 32 règle l'amplitude du signal engendré par l'oscillateur local 34. Ce signal est échantillonné à la fréquence $f_{s1}$ par le commutateur à haute vitesse S2 qui est commandé par l'unité de traitement de données 11. Ainsi, le limiteur de signal 32 et le commutateur à haute vitesse S2 (de même que le limiteur de signal 30 et le commutateur à haute vitesse S1) forment un convertisseur analogique/numérique. Ensuite, le signal est filtré par le filtre passe-bas 33 pour que l'on garde uniquement la première répétition du spectre centré sur 0 MHz. Le filtre passe-bas 33 est aussi un filtre numérique de préférence de l'ordre 2 ou supérieur.

Le circuit 12 comprend un générateur de code pseudo-aléatoire 35, un commutateur à haute vitesse S3 et un filtre passe-bas 36. Le générateur de code pseudo-aléatoire 12 génère un code de 1023 binaires qui est identique au code C/A émis par un des satellites GPS. Le code exact généré, et par conséquent le satellite recherché et poursuivi par le récepteur 1, est déterminé par un signal de commande provenant de l'unité de traitement de données 11. On appellera par la suite le code pseudo-aléatoire produit par le récepteur "le code local". Les binaires qui constituent le code local sont générés à une cadence de 1,023 MHz (réglée par des impulsions d'horloge fournis par l'unité de traitement de données 11), ce qui correspond à la fréquence nominale du code C/A émis par le satellite GPS recherché. Le code local est échantillonné à la fréquence $f_{s1}$ par un commutateur à haute vitesse S3 qui est commandé par l'unité de traitement de données 11. Ensuite, le signal échantillonné est filtré par le filtre passe-bas 36. Le filtre passe-bas est aussi un filtre numérique de préférence de l'ordre 2 ou supérieur.

Dans la boucle à verrouillage 1 de la figure 2, le modulateur 14 représenté à la figure 2 est réalisé par une porte EXCLUSIVE-OU. Les signaux de sortie des filtres passe-bas 33 et 36 sont appliqués respectivement aux deux entrées de la porte EXCLUSIVE-OU 14. Le signal de sortie de la porte EXCLUSIVE-OU 14 est par conséquent un signal ayant le spectre du code local transposé à une fréquence centrale $f_{LO}$.

Dans un autre mode de réalisation (non représenté), les signaux de sortie de l'oscillateur local 34 et du générateur de codes pseudo-aléatoires 35 peuvent être directement appliqués aux deux entrées de la porte EXCLUSIVE-OU 14. Dans ce cas, on peut échantillonner le signal de sortie de la porte EXCLUSIVE-OU 14 à la fréquence $f_{s1}$ par un commutateur à haute vitesse, du même type que les commutateurs S2 et S3. Ensuite, ce signal peut être filtré par un filtre passe-bas, du même type que les filtres passe-bas 33 et 36. Avantageusement, cet agencement nécessite moins de composants que la boucle à verrouillage de délai 5 représentée la figure 2.

Le circuit de corrélation 8 comprend trois portes EXCLUSIVE-OU 37, 38 et 39, dont les sorties sont respectivement reliées aux entrées de trois portes NON 40, 41 et 42, et deux circuits de délai 43 et 44. La sortie du filtre passe-bas 31 est reliée à une des entrées des portes EXCLUSIVE-OU 37, 38 et 39. La sortie de la porte EXCLUSIVE-OU 14 est reliée à l'autre entrée des portes EXCLUSIVE-OU 37, 38 et 39. Toutefois, les circuits de délai 43 et 44 introduisent un décalage de Δ/2 entre les signaux aux entrées des portes EXCLUSIVE-OU 37 et 38 et entre les signaux aux entrées des portes EXCLUSIVE-OU 38 et 39. Dans ce cas, Δ correspond à la durée d'un binaire de code (un binaire de code est appelé en anglais un "chip"). Les circuits de délai 43 et 44 sont nécessaires dans la phase de poursuite du récepteur 1 et leur fonctionnement sera expliqué à ce propos plus loin. Les portes NON 40, 41 et 42 inversent l'état logique du signal de sortie respectivement des portes EXCLUSIVE-OU 37, 38 et 39. Ainsi, lorsque les deux binaires aux entrées des portes EXCLUSIVE-OU 37, 38 et 39 ont le même état logique, c'est-à-dire lorsqu'il y a une corrélation entres eux, les signaux de sortie des portes NON 40, 41 et 42 ont un état logique haut et lorsque les deux binaires aux entrées des portes EXCLUSIVE-OU 37, 38 et 39 n'ont pas le même état logique, c'est-à-dire lorsqu'ils ne sont pas corrélés, les signaux de sortie des portes NON 40, 41 et 42 ont un état logique bas.

Le fait que les signaux de sortie de la porte EXCLUSIVE-OU 14 et du limiteur 30 sont effectivement échantillonnés à la même fréquence permet l'utilisation des portes EXCLUSIVE-OU 37, 38 et 39 dans la boucle à verrouillage de délai 5, au lieu de multiplicateurs, pour combiner ces signaux ensemble. De même, le fait que les signaux de sortie du générateur de codes pseudo-aléatoires à la même fréquence permet l'utilisation de la porte EXCLUSIVE-OU 14, au lieu d'un multiplicateur, pour combiner ces signaux ensemble. Ceci représente une nette simplification de la réalisation du récepteur GPS.

La corrélation décrite ci-dessus ramène le spectre du signal d'une largeur initiale d'environ 2 MHz à celle du spectre de l'information, soit 100 Hz. Cette opération ne fournit pas un signal directement utilisable. Un filtrage est nécessaire pour éliminer les composantes indésirables se trouvant en dehors du spectre compressé. Le circuit de filtrage 9 comprend des filtres passe-tout 45, 46 et 47, reliés respectivement aux sorties des portes NON 40, 41 et 42, et des filtres passe-bande 48, 49 et 50 reliés respectivement aux sorties des filtres passe-tout 45, 46 et 47.

Les filtres passe-tout 45, 46 et 47 sont respectivement constitués de la combinaison d'un intégrateur 45.1, d'un commutateur à haute vitesse S4 et d'un dérivateur 45.2, de la combinaison d'un intégrateur 46.1, d'un commutateur à haute vitesse S5 et d'un dérivateur 46.2 et de la combinaison d'un intégrateur 47.1 d'un commutateur à haute vitesse S6 et d'un dérivateur 47.2.

La fonction de transfert des filtres 45, 46 et 47 est de type passe-tout, mais l'interruption des commutateurs à haute tension 54, 55 et 56, respectivement entre l'intégrateur 45.1 et le dérivateur 45.2, entre l'intégrateur 46.1 et le dérivateur 46.2, entre l'intégrateur 47.1 et 47.2, permet un sous-échantillonnage des signaux présents à l'entrée des filtres 45, 46 et 47.

Ensuite, les filtres 48, 49 et 50 réalisent la fonction de transfert passe-bande désirée sur des signaux à faible fréquence d'échantillonnage provenant respectivement de la sortie des filtres combinatoires 45, 46 et 47. Les filtres passe-bande 48, 49 et 50 sont des filtres numériques de préférence de l'ordre 4 ou supérieurs. Ce sous-échantillonnage apporte les avantages suivants : (i) une diminution de la sensibilité nécessaire des filtres passe-bande 48, 49 et 50, et (ii) une diminution de la consommation d'énergie de la boucle à verrouillage de délai 5.

Les signaux obtenus à la sortie des filtres passe-bande 48, 49 et 50 sont composés d'une porteuse modulée en phase (BPSK) par l'information (émise au rythme de 50 Hz) du message GPS et modulés en amplitude par la fonction de corrélation du code local et du code C/A émis par le satellite GPS en question. Ces signaux sont appliqués aux entrées du circuit de détection de signal 10. Ce dernier comprend trois multiplicateurs 51, 52 et 53 reliés respectivement à trois circuits d'intégration et de remise à zéro 54, 55 et 56. Les multiplicateurs 51, 52 et 53 sont chacun agencés de façon à engendrer un signal de sortie qui est le carré de son signal d'entrée.

L'élévation au carré par les multiplicateurs 51, 52 et 53 indique la puissance des signaux obtenus après filtrage par les filtres passe-bande 48, 49 et 50 et l'intégration par les circuits 54, 55 et 56 permet d'en mesurer l'énergie. Les valeurs ainsi obtenues étant proportionnelle à l'amplitude des signaux de sortie des filtres passe-bande 48, 49 et 50, elles indiquent la qualité de la corrélation du code local et du code C/A émis par le satellite GPS.

Les valeurs numériques provenant des sorties des circuits d'intégration et de remise à zéro (RAZ) 54, 55 et 56 sont toutes stockées dans le circuit de traitement de données 11 pour être traitées par celui-ci. Ensuite, les valeurs dans les circuits d'intégration et de remise à zéro 54, 55 et 56 sont remises à zéro.

On remarquera que le récepteur 1 comporte trois canaux à signaux C1, C2 et C3 quasi-identiques, à savoir (i) un premier canal C1 défini par la porte EXCLUSIVE-OU 37, la porte NON 40, le filtre passe-tout 45, le filtre passe-bande 48, le multiplicateur 51 et le circuit d'intégration et de remise à zéro 54, (ii) un deuxième canal C2 défini par la porte EXCLUSIVE-OU 38, la porte NON 41, le filtre passe-tout 46, le filtre passe-bande 49, le multiplicateur 52 et le circuit d'intégration et de remise à zéro 55 et (iii) un troisième canal C3 défini par la porte EXCLUSIVE-OU 39, la porte NON 42, le filtre passe-tout 47, le filtre passe-bande 50, le multiplicateur 53 et le circuit d'intégration et de remise à zéro 56. Les signaux présents dans ces trois canaux sont identiques, mais déphasés de $\Delta/2$ l'un par rapport à l'autre.

Le fonctionnement du récepteur 1 pendant la phase d'acquisition et pendant la phase de poursuite sera décrit ci-après.

La phase d'acquisition consiste essentiellement à effectuer la recherche d'un satellite GPS visible pour le récepteur 1 en l'identifiant au moyen de son code C/A. L'acquisition consiste à corréler le code local généré par le récepteur 1 avec le signal reçu du satellite GPS. Il s'avère nécessaire, pour que la corrélation puisse avoir lieu, de corriger les erreurs qui entacheraient la similitude des deux codes pseudo-aléatoires. Deux approches distinctes peuvent être utilisées pour réaliser l'acquisition, à savoir soit une acquisition séquentielle, soit une acquisition à une fréquence décalée. Le récepteur 1 utilise la première de ces deux approches.

Pendant la phase d'acquisition séquentielle du récepteur 1, on recherche une corrélation entre toutes les phases possibles du code local généré par le récepteur 1 à une fréquence fixe, à savoir la fréquence $f_{LO}$, avec le signal reçu du satellite recherché. Pour ce faire, l'unité de traitement de données numériques 11 commande le générateur des codes pseudo-aléatoires 12 pour que ce dernier génère, l'un après l'autre, plusieurs ensembles de 1023 binaires qui constituent le code C/A émis par le satellite. Pendant chaque émission d'un ensemble, l'unité de traitement de données numériques 11 supprime une des impulsions d'horloge fournies au générateur de codes pseudo-aléatoires 12 (un ensemble étant le cycle complet de 1023 binaires constituant le code C/A). Chaque cycle complet du code local généré par le récepteur 1 est donc déphasé par rapport au cycle précèdent. Ainsi, un "glissement" de phase est établi entre le code C/A émis par le satellite et le code local généré par le récepteur 1.

Au début de la phase d'acquisition, l'oscillateur local 34 est commandé pour qu'il fournisse un signal de sortie à une fréquence fLO de 1,023 MHz. Par conséquent, le signal de sortie de la porte EXCLUSIVE-OU 14 est centré sur une fréquence nominale de 1,023 MHz avec une largeur de bande de l'ordre de 2 MHz. La corrélation effectuée par le circuit de corrélation 8 abaisse la fréquence centrale nominale à une valeur de (1,050 - 1,023) MHz = 27 kHz.

Pour détecter qu'il y a une synchronisation entre le code C/A émis par le satellite et le code local généré par le récepteur 1 pendant ce "glissement" de code, il faut pouvoir observer une différence entre un signal corrélé et un signal non-correlé avec le code local. Si l'on savait avec précision la fréquence intermédiaire $f_{IF1}$ et la fréquence du signal généré par l'oscillateur local 34, on pourrait utiliser un filtre passe-bande de 100 Hz centré sur une valeur de 27 kHz et relié à une des sorties du circuit de corrélation 8 pour détecter cette synchronisation. Toutefois, l'information recherchée peut se trouver dans tout un domaine de fréquence dont les limites vont dépendre de la variation de la fréquence due à l'effet Doppler et l'erreur de fréquence de l'oscillateur par rapport à sa valeur idéale. La position du satellite GPS par rapport à un utilisateur stationnaire implique, pour le premier de ces effets, une valeur de référence de l'ordre de $\pm$ 4 kHz. Les imprécisions de l'oscillateur local dépendent fortement du type de celui-ci et de la technologie utilisée. De manière générale, on peut estimer que la dérive maximale est du même ordre de grandeur que celle produite par l'effet Doppler.

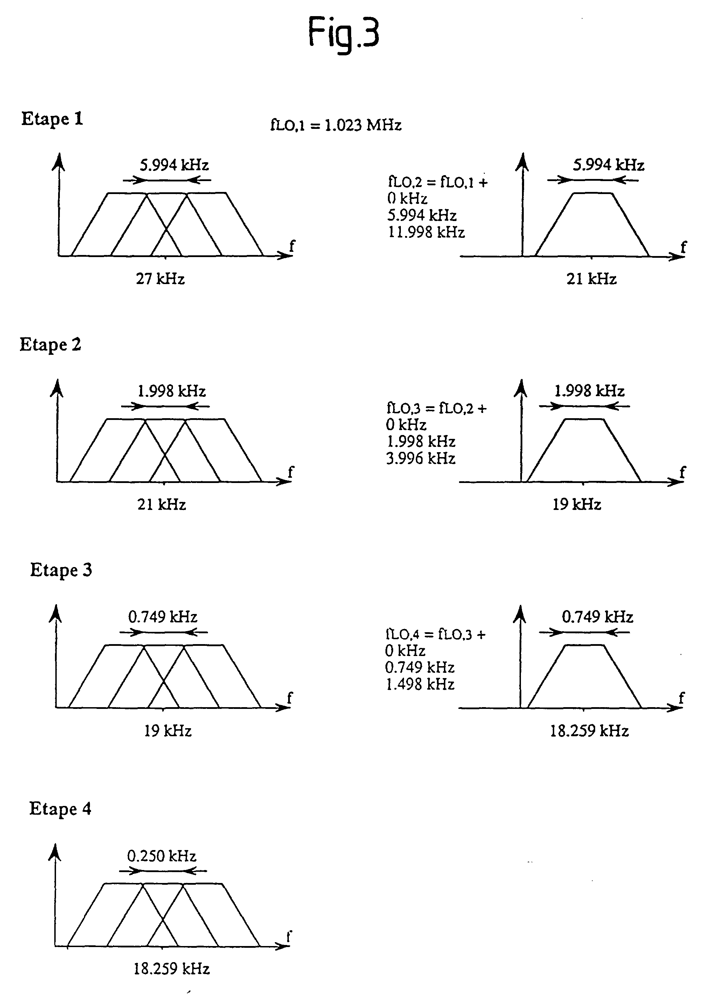

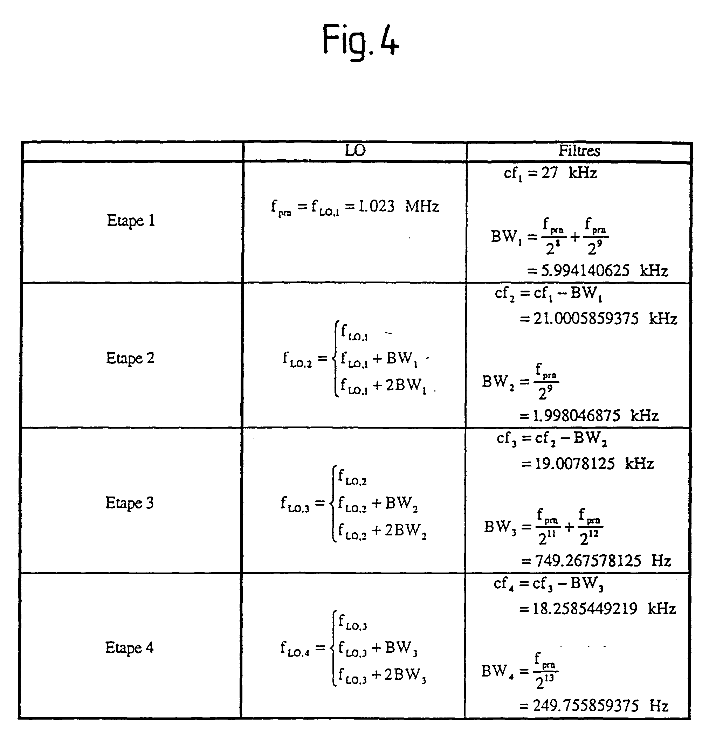

Pour compenser ces effets, on utilise les filtres passe-bande 48, 49 et 50 des trois canaux C1, C2 et C3 de la boucle à verrouillage de délai 5 (filtres qui sont nécessaires dans la phase de poursuite, comme on le verra plus loin) en des étapes successives, ceci de façon trois fois plus précise à chaque étape. La figure 3 montre les bandes passantes des filtres des trois canaux C1, C2 et C3 de la boucle à verrouillage de délai 5 dans des étapes successives de la phase d'acquisition du récepteur 1. Au début de la phase d'acquisition (étape 1), l'unité de traitement de données 11 règle les coefficients des filtres passe-bande 48, 49 et 50 de manière qu'ils ont chacun une passe-bande de 5,994 kHz et que ces bandes passantes soient centrées respectivement sur des fréquences de 21 kHz, 27 kHz et 33 kHz. La valeur de 5,994 kHz a été choisie car elle est égale à $\frac{f_{prn}}{8} + \frac{f_{prn}}{9}$ et par conséquent elle peut être calculée par l'unité de traitement de données 11. Les calculs, effectués par l'unité de traitement de données 11, des valeurs de la fréquence du signal de sortie de l'oscillateur local 34, de la fréquence centrale et de la largeur de bande des filtres passe-bande 48, 49 et 50 à chaque étape de la phase d'acquisition du récepteur 1 sont indiqués à la figure 4.

Les bandes passantes, dans cette étape, forment un filtre passe-bande "combiné" avec une largeur de bande de l'ordre de 18 kHz et avec une fréquence centrale de 27 kHz. Cette largeur de bande est choisie pour qu'elle soit au moins aussi grande que les écarts de fréquence qui affectent le récepteur 1 et le signal reçu.

Lorsque le code local du récepteur 1 est corrélé avec le code C/A du signal émis par le satellite, le niveau d'énergie du signal ainsi démodulé se trouve alors ramené dans sa largeur spectrale d'origine avec un rapport signal sur bruit qui permet la détection de cette démodulation. Les autres éléments faisant partie du signal transmis par le satellite GPS restent étendus sur tout le spectre, donc avec une faible puissance dans la bande qui nous intéresse. Il est alors possible, grâce au filtrage effectué par les trois filtres passe-bande 48, 49 et 50, de détecter dans quelle partie de la bande du filtre "combiné" se trouve le signal démodulé.

Pour déterminer plus précisément la fréquence du signal démodulé, la largeur de bande du filtre passe-bande 48, 49 et 50, dans laquelle la présence du signal démodulé a été détectée, est répartie (étape 2) parmi les trois filtres passe-bande 48, 49 et 50. Une valeur convenable de $\frac{f_{prn}}{9}$ = 1,998 kHz peut être utilisée pour cette largeur de bande. La fréquence $f_{LO,2}$ du signal de sortie de l'oscillateur local 34, dans l'étape 2, est réglée pour qu'elle soit égale (i) à la fréquence fLO,1 de l'oscillateur local à l'étape 1 dans le cas où le signal démodulé est détecté dans la largeur de bande du filtre passe-bande centré sur 21 kHz, (ii) à la fréquence fLO,1 de l'oscillateur local à l'étape 1 plus la largeur de bande BW1 des filtres passe-bande dans cette étape dans le cas où le signal démodulé est détecté dans la largeur de bande du filtre passe-bande centré sur 27 kHz, ou (iii) à la fréquence fLO,1 de l'oscillateur local à l'étape 1 plus deux fois la largeur de bande BW1 des filtres passe-bande dans cette étape dans le cas où le signal démodulé est détecté dans la largeur de bande du filtre passe-bande centré sur 33 kHz. Ainsi, la fréquence centrale du signal démodulé dans l'étape 1 est ramenée dans l'étape 2 dans la largeur de bande du filtre passe-bande centré sur la fréquence la plus basse (21,00 kHz à l'étape 1).

Pour déterminer encore plus précisément la fréquence du signal démodulé, la largeur de bande du filtre passe-bande 48, 49 et 50 dans laquelle la présence du signal démodulé a été détectée dans l'étape 2 est de nouveau répartie parmi les trois filtres passe-bande 48, 49 et 50 dans l'étape 3. Une valeur convenable de $\frac{f_{prn}}{2^{11}} + \frac{f_{prn}}{2^{12}}$ = 749,268 Hz peut être utilisée pour cette largeur de bande. La fréquence $f_{LO,3}$ du signal de sortie de l'oscillateur local 34, à l'étape 3, est réglée pour qu'elle soit égale (i) à la fréquence fLO,2 de l'oscillateur local à l'étape 2 dans le cas où le signal démodulé est détecté dans la largeur de bande du filtre passe-bande centré sur 19,02 kHz, (ii) à la fréquence fLO,2 de l'oscillateur local à l'étape 2 plus la largeur de bande BW2 des filtres passe-bande dans cette étape dans le cas où le signal démodulé est détecté dans la largeur de bande du filtre passe-bande centré sur 21,00 kHz, ou (iii) à la fréquence fLO,2 de l'oscillateur local à l'étape 2 plus deux fois la largeur de bande BW2 des filtres passe-bande dans cette étape dans le cas où le signal démodulé est détecté dans la largeur de bande du filtre passe-bande centré sur 22,998 kHz. Ainsi, la fréquence centrale du signal démodulé dans l'étape 2 est ramenée dans l'étape 3 dans la largeur de bande du filtre passe-bande centré sur la fréquence la plus basse (19,007 kHz à l'étape 3).

Finalement, la largeur de bande du filtre passe-bande 48, 49 et 50 dans laquelle la présence du signal démodulé a été détectée dans l'étape 3 est de nouveau répartie parmi les trois filtres passe-bande 48, 49 et 50 dans l'étape 4. Une valeur convenable de $\frac{f_{prn}}{2^{13}}$ = 249,756 Hz peut être utilisée pour cette largeur de bande. La fréquence $f_{LO,4}$ du signal de sortie de l'oscillateur local 34, à l'étape 4, est réglée pour qu'elle soit égale (i) à la fréquence fLO,3 de l'oscillateur local à l'étape 3 dans le cas où le signal démodulé est détecté dans la largeur de bande du filtre passe-bande centré sur 18,259 kHz, (ii) à la fréquence fLO,3 de l'oscillateur local à l'étape 3 plus la largeur de bande BW3 des filtres passe-bande dans cette étape dans le cas où le signal démodulé est détecté dans la largeur de bande du filtre passe-bande centré sur 19,008 kHz, ou (iii) à la fréquence fLO,3 de l'oscillateur local à l'étape 3 plus deux fois la largeur de bande BW3 des filtres passe-bande dans cette étape dans le cas où le signal démodulé est détecté dans la largeur de bande du filtre passe-bande centré sur 19,757 kHz. Ainsi, la fréquence centrale du signal démodulé dans l'étape 3 est ramenée dans l'étape 4 dans la largeur de bande du filtre passe-bande centré sur la fréquence la plus basse (18,259 kHz à l'étape 4).

Comme on le voit à la figure 4, le fait de ramener la fréquence centrale du signal détecté à chaque étape dans la largeur de bande du filtre passe-bande centré sur la "même" fréquence (soit la fréquence la plus basse, soit la fréquence la plus haute, soit la fréquence du milieu des trois fréquences centrales des trois filtres passe-bande 48, 49 et 50) à l'étape suivante permet une nette simplification du calcul des coefficients transmis à ces filtres par l'unité de traitement de données 11, ainsi qu'une réduction dans le nombre de données qui doivent être stockées par ce dernier pour effectuer ces calcul.

On voit donc que pendant la phase d'acquisition du récepteur, l'unité de traitement de données règle les fréquences centrales et les largeurs de bandes desdits filtres passe-bande en plusieurs étapes pour que les filtres passe-bande répartissent, à chaque étape, une des bandes passantes de l'étape précédente en des bandes passantes ne se recouvrant pas.

Le processus d'acquisition particulier qui vient d'être décrit, à savoir un processus en quatre étapes successives utilisant les trois filtres passe-bande de la boucle à verrouillage de délai 5 de façon trois fois plus précise à chaque étape, permet la détection du signal GPS émis par satellite avec une erreur de $\pm$ 125 Hz. Une telle marge d'erreur permet au circuit de démodulation et de poursuite 6 de pouvoir effectuer conjointement une démodulation de la porteuse, ramenée à la fréquence centrale du signal corrélé, et la poursuite de cette porteuse.

Il faut noter que le nombre d'étapes successives, la largeur de bande des filtres passe-bande et les fréquences centrales des filtres passe-bande à chaque étape sont dépendants des erreurs de fréquence auxquelles le récepteur est soumis et de la précision avec laquelle la fréquence centrale du signal corrélé doit être connue. Le mode de réalisation décrit ci-dessus est présenté uniquement à titre d'exemple.

Résumons ce que l'on a obtenu dans la phase d'acquisition. Le code local du récepteur 1 et le code C/A du satellite GPS sont synchronisés à un déphasage près compris entre $\pm \Delta/2$. La fréquence du signal de sortie de l'oscillateur local 34 a été modifiée en quatre étapes successives de manière à avoir la fréquence centrale du signal corrélé tombant dans la largeur de bande d'un des filtres passe-bande 48, 49 ou 50.

Grâce aux circuits de délai 43 et 44, les versions en avance et en retard du code C/A, incorporant un délai d'un demi-binaire, sont respectivement fournis à une entrée de la porte EXCLUSIVE-OU 39 du canal C3 et à une entrée de la porte EXCLUSIVE-OU 37 du canal C1. Ces versions du code local sont mises en corrélation avec le code C/A émis par le satellite. L'amplitude du signal après corrélation est une fonction du déphasage entre les deux codes. Le fait d'utiliser la différence des carrés des amplitudes des porteuses obtenues avec des codes locaux, décalés respectivement de $\pm \Delta/2$, à pour conséquence que la commande de l'oscillateur local 34, pilotant le générateur de codes pseudo-aléatoires 35, est linéairement dépendante du déphasage.

Lorsque la différence entre le carré du signal de sortie du filtre passe-bande 48 du canal C1 ("en avance") et le carré du signal de sortie du filtre passe-bande 50 du canal C3 ("en retard") est nul, le code C/A du satellite recherché et celui du récepteur 1 sont synchronisés avec un déphasage nul pour le canal C2 ("ponctuelle"). Dès cet instant, la poursuite du code C/A du satellite est assurée aussi longtemps qu'un parasite ou que la disparition de vue du satellite ne provoque pas le déverrouillage de la boucle à verrouillage de délai. Le signal obtenu à la sortie du filtre passe-bas 49 est utilisé dans la phase de poursuite pour réaliser l'extraction du message de navigation GPS.

De nombreuses modifications peuvent être apportées au récepteur selon l'invention dont des divers modes de réalisation viennent d'être décrits, sans pour autant sortir du cadre de cette invention.

Ainsi, par exemple, alors que la phase d'acquisition dans le mode de réalisation de l'invention décrit ci-dessus a été effectuée en utilisant la méthode d'acquisition séquentielle, il est toutefois possible d'utiliser la méthode d'acquisition à une fréquence décalée. Il s'agit ici de générer le code local du récepteur à une fréquence fixe intentionnellement décalée de celles possibles pour le signal reçu (toutes perturbations comprises). La durée d'un binaire de code généré sera donc différente de celui reçu, ce qui provoquera le phénomène de glissement des codes l'un par rapport à l'autre. Il est donc possible de tester toutes les phases relatives des deux codes sans que l'unité de traitement de données 11 doive supprimer une impulsion d'horloge pendant chaque émission du code local.

Il est également possible d'inhiber l'effet des circuits de délai pendant la phase d'acquisition du récepteur 1.

Lors de la phase de poursuite, on a besoin des trois canaux C1, C2 et C3 parallèles déphasés dans le temps pour obtenir la fonction de poursuite par soustraction des signaux "en avance" et "en retard" (expliqué ci-dessus). En phase d'acquisition, cette soustraction n'a plus lieu et les trois canaux C1, C2 et C3 fournissent chacun un résultat propre. Ainsi, le décalage dans le temps dû aux circuits de retard 43, 44 n'a plus aucune raison d'être. Si on le maintient quand même, l'unité de traitement de données 11 doit, en fin de phase d'acquisition, synchroniser le code local avec le code c/A reçu du satellite GPS en tenant compte de ce déphasage. Cette complication peut être évitée en effectuant l'acquisition sur les trois canaux C1, C2 et C3 en phase dans le temps si l'on applique, par exemple, un court-circuit à travers chacun des circuits de retard 43 et 44 pendant la phase d'acquisition.

Par contre, il est également possible de profiter de la présence des circuits de délai 43 et 44 pendant la phase d'acquisition du récepteur 1. Comme on l'a décrit ci-avant, pendant la phase d'acquisition du récepteur 1, plusieurs ensembles de 1023 binaires sont générés l'un après l'autre par le générateur de codes pseudo-aléatoire 12. Pour rechercher une corrélation entre le code local et le code c/A émis par le satellite GPS, chaque cycle complet du code local généré est déphasé par rapport au cycle précédent. Pendant que le "glissement" de phase s'achève, les filtres passe-bande 48, 49 et 50 restent centrés sur les fréquences et ont des bandes passantes définies pour cette étape (voir figure 4). Si l'on ne détecte aucune corrélation dans les trois canaux C1, C2 et C3 lors de la génération d'un cycle complet du code local, on recherche une corrélation dans un des trois canaux C1, C2 et C3 lors de la génération d'un cycle complet du code qui est déphasé par rapport au code précédent, jusqu'à ce que toutes les phases du code soient générées.

Or, les circuits de délai 43 et 44 introduisent un déphasage entre les trois canaux C1, C2 et C3. Il est possible d'utiliser ce déphasage pour améliorer la vitesse du glissement de phase entre le code c/A émis par le satellite GPS et le code local généré par le récepteur 1. Par exemple, pendant chaque étape de la phase d'acquisition, les filtres passe-bande 48, 49 et 50 peuvent être, dans un premier temps, tous centrés sur une des trois fréquences centrales des bandes-passantes montrées à la figure 3. Dans ce cas, une corrélation entre le code local et le code C/A émis par le satellite est recherché dans les trois canaux C1, C2 et C3, ces canaux couvrant la même bande-passante, mais ayant un déphasage de code différent. Ensuite, les filtres passe-bande 48, 49 et 50 peuvent être, dans un deuxième temps, tous centrés sur une deuxième des trois fréquences centrale des bandes-passantes d'une étape indiquée à la figure 3 et, de nouveau, une corrélation entre les deux codes peut être recherchée.

Finalement, dans un troisième temps, les filtres passe-bande 48, 49 et 50 peuvent être tous centrés sur la troisième fréquence centrale des bandes-passantes de cette étape et, encore une fois, une corrélation entre les deux codes est recherchée.

Si une corrélation n'est pas détectée, on recommence la procédure décrite ci-dessus avec un cycle complet du code local généré par le générateur de codes pseudo-aléatoires 35, ce cycle du code étant déphasé par rapport au cycle du code précédent. Mais, grâce aux déphasages dus aux circuits de délai 43 et 44, un glissement des trois plus grandes phases peut être effectué par le générateur de codes pseudo-aléatoires 35. Ceci permet une corrélation plus rapide du code c/A émis par le satellite GPS et du code local pendant chaque étape de la phase d'acquisition du récepteur 1.

**Revendications**

1. Boucle à verrouillage de délai destinée à être utilisée dans un récepteur d'un signal émis par un satellite GPS, ledit signal comportant de l'information modulée par un code pseudo-aléatoire, ledit récepteur étant agencé de façon à rechercher, lors d'une phase d'acquisition, ledit satellite GPS pour identification dudit code pseudo-aléatoire, comprenant

- un générateur de codes pseudo-aléatoires (35) pour générer une copie du code pseudo-aléatoire dudit satellite;

- un oscillateur local (34) ;

- un modulateur (14) pour moduler ladite copie du code pseudo-aléatoire dudit satellite provenant dudit générateur de codes pseudo-aléatoires (35) avec le signal de sortie dudit oscillateur local (34) ;

- des canaux à signaux (C1, C2, C3) comportant chacun un corrélateur (37-42) relié à la sortie dudit modulateur (14), un filtre passe-bande (48-50) relié à la sortie dudit corrélateur et un circuit de détection de signaux (51-56) relié à la sortie dudit filtre passe-bande; et,

- une unité de traitement de données (11) capable de régler la fréquence centrale du signal de sortie dudit oscillateur local en fonction des signaux de sortie desdits circuits de détection de signaux;

ladite boucle à verrouillage de délai étant caractérisée en ce que ladite unité de traitement de données (11) est agencée de façon à régler la fréquence centrale de l'oscillateur local (34) ainsi que les fréquences centrales et les largeurs de bandes desdits filtres passe-bande (48-50) en plusieurs étapes pendant ladite phase d'acquisition pour que lesdits filtres passe-bande répartissent, à chaque étape, une des bandes passantes de l'étape précédente en des bandes passantes ne se recouvrant pas, et de façon à ce que la fréquence centrale du signal détecté par le circuit de détection (51-56) de l'un desdits canaux à signaux (C1, C2, C3) se trouve, à chaque étape, dans la largeur de bande de l'un des filtres passe-bande (48-50).

2. Boucle à verrouillage de délai selon la revendication 1 caractérisée en ce que ladite unité de traitement de données (11) est en outre agencée de façon à ramener, à chaque étape, la fréquence centrale dudit signal détecté par le circuit de détection (51-56) de l'un des canaux à signaux (C1, C2, C3) dans la largeur de bande d'un même filtre passe-bande (48, 49 ou 50).

3. Boucle à verrouillage de délai selon la revendication 2, caractérisée en ce que la fréquence centrale dudit signal détecté par le circuit de détection (51-56) de l'un des canaux à signaux (C1, C2, C3) est ramenée, à chaque étape, dans la largeur de bande du filtre passe-bande (48) ayant la fréquence centrale la plus basse.

4. Boucle à verrouillage de délai selon la revendication 1, 2 ou 3, caractérisée en ce que chaque canal à signaux (C1, C2, C3) comprend en outre un filtre passe-tout (45-47) relié respectivement entre ledit corrélateur (37-42) et ledit filtre passe-bande (48-50), chaque filtre passe-tout (45-47) comprenant un intégrateur (45.1, 46.1, 47.1) relié à un dérivateur (45.2, 46.2, 47.2) par l'intermédiaire d'un commutateur (S4-S6), chaque commutateur (S4-S6) étant commandé par ladite unité de traitement de données (11) pour sous-échantillonner les signaux fournis à l'entrée de chaque filtre passe-tout (45-47).

## Patentansprüche

1. Verzögerungsverriegelungsschleife, die dazu bestimmt ist, in einem Empfänger für ein von einem GPS-Satelliten gesendetes Signal verwendet zu werden, wobei das Signal Informationen enthält, die durch einen pseudozufälligen Code moduliert sind, und der Empfänger so beschaffen ist, daß er in einer Erfassungsphase den GPS-Satelliten sucht, um den pseudozufälligen Code zu identifizieren, umfassend

   - einen Generator (35) für pseudozufällige Codes, der eine Kopie des pseudozufälligen Codes des Satelliten erzeugt;
   - einen Hilfsoszillator (34);
   - einen Modulator (14) zum Modulieren der vom Generator (35) für pseudozufällige Codes stammenden Kopie des pseudozufälligen Codes des Satelliten mit dem Ausgangssignal des Hilfsoszillators (34);
   - Signalkanäle (C1, C2, C3), wovon jeder einen mit dem Ausgang des Modulators (14) verbundenen Korrelator (37-42), ein Bandpaßfilter (48-50), das mit dem Ausgang des Korrelators verbunden ist, und eine Signalerfassungsschaltung (51-56), die mit dem Ausgang des Bandpaßfilters verbunden ist, umfaßt; und
   - eine Datenverarbeitungseinheit (11), die die Mittenfrequenz des Ausgangssignals des Hilfsoszillators in Abhängigkeit von den Ausgangssignalen der Signalerfassungsschaltungen einstellen kann;

   wobei die Verzögerungsverriegelungsschleife dadurch gekennzeichnet ist, daß die Datenverarbeitungseinheit (11) so beschaffen ist, daß sie die Mittenfrequenz des Hilfsoszillators (34) sowie die Mittenfrequenzen und die Bandbreiten der Bandpaßfilter (48-50) während der Erfassungsphase in mehreren Schritten einstellt, damit die Bandpaßfilter in jedem Schritt eines der Durchlaßbänder des vorhergehenden Schrittes in nicht überlappende Durchlaßbänder aufteilen, und so beschaffen ist, daß sich die Mittenfrequenz des von der Erfassungsschaltung (51-56) erfaßten Signals eines der Signalkanäle (C1, C2, C3) erfaßten Signals in jedem Schritt in der Bandbreite eines der Bandpaßfilter (48-50) befindet.

2. Verzögerungsverriegelungsschleife nach Anspruch 1, dadurch gekennzeichnet, daß die Datenverarbeitungseinheit (11) außerdem so beschaffen ist, daß sie in jedem Schritt die Mittenfrequenz des von der Erfassungsschaltung (51-56) eines der Signalkanäle (C1, C2, C3) erfaßten Signals in die Bandbreite desselben Bandpaßfilters (48-49 oder 50) zurückführt.

3. Verzögerungsverriegelungsschleife nach Anspruch 2, dadurch gekennzeichnet, daß die Mittenfrequenz des von der Erfassungsschaltung (51-56) eines der Signalkanäle (C1, C2, C3) erfaßten Signals in jedem Schritt in die Bandbreite des Bandpaßfilters (48), das die niedrigste Mittenfrequenz besitzt, zurückgeführt wird.

4. Verzögerungsverriegelungsschleife nach Anspruch 1, 2 oder 3, dadurch gekennzeichnet, daß jeder Signalkanal (C1, C2, C3) außerdem ein Durchlaßfilter (45-47) umfaßt, das jeweils zwischen den Korrelator (37-42) und das Bandpaßfilter (48-50) geschaltet ist, wobei jedes Durchlaßfilter (45-47) einen Integrator (45.1, 46.1, 47.1) umfaßt, der über einen Kommutator (S4-S6) mit einem Differenzierer (45.2, 46.2, 47.2) verbunden ist, wobei jeder Kommutator (S4-S6) durch die Datenverarbeitungseinheit (11) gesteuert wird, um für die an den Eingang jedes Durchlaßfilters (45-47) gelieferten Signale eine Unterabtastung auszuführen.

## Claims

1. Delay locked loop intended to be used in a receiver of signal emitted by a GPS satellite, said signal including information modulated by a pseudo-random code, said receiver being adapted so as to search, during an acquisition phase, said GPS satellite to identify said pseudo-random code, comprising

   - a pseudo-random code generator (35) for generating a copy of said pseudo-random code of said satellite;
   - a local oscillator (34);
   - a modulator (14) for modulating said copy of the pseudo-random code of said satellite coming from said pseudo-random generator (35) with the output signal of said local oscillator (34);
   - a plurality of signal channels (C1, C2, C3) each including a correlator (37-42) connected to the output of said modulator (14), a pass-band filter (48-50) connected to the output of said correlator and a signal detection circuit (51-56) connected to the output of said pass-band filter;

and

- a data processing unit (11) adapted to control the central frequency of the output signal of said local oscillator as a function of the output signal of said signal detection circuits;

said delay lock loop being characterized in that said data processing unit (11) is adapted to control the central frequency of the local oscillator (34) as well as the central frequencies and the bandwidths of said pass-band filters (48-50) in several steps during said acquisition phase, so that said pass-band filters divide up, at each step, one of the pass-bands of the preceding step into non-overlapping pass-bands and so that the central frequency of the signal detected by the detection circuit (51-56) of one of the signal channels (C1, C2, C3) is, at each step, in the bandwidth of one of the pass-band filters (48-50).

2. Delay locked loop according to claim 1, characterized in that said data processing unit (11) is further adapted to bring, at each step, the central frequency of said signal detected by the detection circuit (51-56) of one of the signal channels (C1, C2, C3) in the bandwidth of a same pass-band filter (48, 49 or 50).

3. Delay locked loop according to claim 2, characterized in that the central frequency of said signal detected by the detection circuit (51-56) of one of the signal channels (C1, C2, C3) is brought, at each step, in the bandwidth of the pass-band filter (48) having the lowest central frequency.

4. Delay locked loop according to claim 1, 2 or 3, characterized in that each signal channel (C1, C2, C3) further comprises an all-pass filter (45-47) connected respectively between said correlator (37-42) and said pass-band filter (48-50) each all-pass filter (45-47) comprising an integrator (45.1, 46.1, 47.1) connected to a derivator (45.2, 46.2, 47.2) by means of a switch (S4-S6), each switch (S4-S6) being controlled by said data processing unit (11) to under-sample the signal supplied to the input of each all-pass filter (45-47).

Fig.1

EP 0 737 868 B1

Fig.2

# Fig.3

Etape 1                                    fLO,1 = 1.023 MHz

5.994 kHz

27 kHz

fLO,2 = fLO,1 +
0 kHz
5.994 kHz
11.998 kHz

5.994 kHz

21 kHz

Etape 2

1.998 kHz

21 kHz

fLO,3 = fLO,2 +
0 kHz
1.998 kHz
3.996 kHz

1.998 kHz

19 kHz

Etape 3

0.749 kHz

19 kHz

fLO,4 = fLO,3 +
0 kHz
0.749 kHz
1.498 kHz

0.749 kHz

18.259 kHz

Etape 4

0.250 kHz

18.259 kHz

# Fig. 4

| | LO | Filtres |
|---|---|---|
| Etape 1 | $f_{pm} = f_{LO,1} = 1.023$ MHz | $cf_1 = 27$ kHz<br><br>$BW_1 = \dfrac{f_{pm}}{2^8} + \dfrac{f_{pm}}{2^9}$<br>$= 5.994140625$ kHz |
| Etape 2 | $f_{LO,2} = \begin{cases} f_{LO,1} \\ f_{LO,1} + BW_1 \\ f_{LO,1} + 2BW_1 \end{cases}$ | $cf_2 = cf_1 - BW_1$<br>$= 21.0005859375$ kHz<br><br>$BW_2 = \dfrac{f_{pm}}{2^9}$<br>$= 1.998046875$ kHz |
| Etape 3 | $f_{LO,3} = \begin{cases} f_{LO,2} \\ f_{LO,2} + BW_2 \\ f_{LO,2} + 2BW_2 \end{cases}$ | $cf_3 = cf_2 - BW_2$<br>$= 19.0078125$ kHz<br><br>$BW_3 = \dfrac{f_{pm}}{2^{11}} + \dfrac{f_{pm}}{2^{12}}$<br>$= 749.267578125$ Hz |
| Etape 4 | $f_{LO,4} = \begin{cases} f_{LO,3} \\ f_{LO,3} + BW_3 \\ f_{LO,3} + 2BW_3 \end{cases}$ | $cf_4 = cf_3 - BW_3$<br>$= 18.2585449219$ kHz<br><br>$BW_4 = \dfrac{f_{pm}}{2^{13}}$<br>$= 249.755859375$ Hz |